# EUROPÄISCHE PATENTANMELDUNG

(11) **EP 0 621 717 A2**
(43) Veröffentlichungstag der Anmeldung: **26.10.1994**
(21) Anmeldenummer: 94106207.7
(22) Anmeldetag: 20.04.1994
(51) Int. Cl.: H04M 11/02

(54) **Türfreisprechanordnung**

(30) Priorität: 20.04.1993 DE 4312686
(71) Anmelder: A. GROTHE & SÖHNE GmbH & Co. KG, D-50969 Köln (DE)
(72) Erfinder: Weyel, Armin, D-50999 Köln (DE)
(74) Vertreter: Grosse, Dietrich, Dipl.-Ing.

(57) **Zusammenfassung**

Die Sprachsteuerung einer Türfreisprechanordung mit an eine Vermittlungseinrichtung angeschlossenen Fernsprechern und einer mit einem Lautsprecher sowie mit einem Mikrofon ausgestatteten Torstation, bei der dem Torlautsprecher ein Verstärker vorgeordnet und dem Tormikrofon ein Vorverstärker nachgeordnet sind, denen zur Sprachsteuerung jeweils alternierend über deren beiden Stromkreisen zugeordnete weitere Verstärker gesteuerte Dämpfungsstufen zugeordnet sind soll mit relativ wenigen und wenig aufwendigen Bauteilen so verbessert werden, daß deren weiter aufgetrennte Sprachsteuerung die Verständigungsmöglichkeiten verbessert und akustische Rückkopplungen praktisch ausschließt. Dazu wird vorgeschlagen, daß als Dämpfungsstufen digital steuerbare Analogschalter vorgesehen sind.

## Beschreibung

Die Erfindung betrifft eine Türfreisprechanordnung mit an eine Vermittlungseinrichtung angeschlossenen Fernsprechern und einer mit einem Lautsprecher sowie einem Mikrofon ausgestatteten Torstation, bei der dem Torlautsprecher ein Verstärker vorgeordnet und dem Tormikrofon ein Vorverstärker nachgeordnet sind, denen zur Sprachsteuerung jeweils alternierend über deren beiden Stromkreisen zugeordnete weitere Verstärker gesteuerte Dämpfungsstufen zugeordnet sind. Entsprechend ausgebildete Schaltungsanordnungen sind aus der DE-OS 32 11 184 bekannt.

Es hat sich jedoch gezeigt, daß die dort vorgesehenen Dämpfungsstufen nicht in allen möglichen Fällen eine saubere Sprachtrennung erlauben und insbesondere starke Geräusche im Bereiche des Tormikrofones sich störend auswirken können, wie auch die Verstärkungsfaktoren der Verstärker des Torlautsprechers und des Tormikrofones zur sicheren Unterbindung von Rückkopplungen oft in ihrem Verstärkungsfaktor unliebsam eingeschränkt auszuführen sind. Nach einem der Ausführungsbeispiele werden diese Nachteile weitgehend durch Einführen eines zweiten Transformators behoben; dieser stellt jedoch ein aufwendiges und daher nach Möglichkeit einzusparendes zusätzliches Bauteil dar.

Die Erfindung geht daher von der Aufgabe aus, mit relativ wenigen und wenig aufwendigen Bauteilen eine Türfreisprechanordnung zu schaffen, deren weiter aufgetrennte Sprachsteuerung die Verständigungsmöglichkeiten verbessert und akustische Rückkopplungen praktisch ausschließt.

Gelöst wird diese Aufgabe mit den Merkmalen des Patentanspruches 1. Mit ihrer Hilfe werden die jeweils nicht gewünschten Sprachkanäle weitgehend ausgeschaltet, wobei die Möglichkeiten des Wechselsprechens nicht beschnitten werden, die jeweilige hauseigene Sprechstelle aber die Übertragungsrichtung zu bestimmen vermag.

Zweckmäßige und vorteilhafte Weiterbildungen der Erfindung sind den Unteransprüchen zu entnehmen.

Im einzelnen sind die Merkmale der Erfindung anhand der folgenden Beschreibung von Ausführungsbeispielen in Verbindung mit diese darstellenden Schaltbildern erläutert. Es zeigen hierbei:
- Figur 1: ein Teilschaltbild einer Türfreisprechanordnung mit einem Netzteil, einem die Verbindung zu Fernsprechapparaten bewirkenden Übertrager sowie dem Mikrofonsowie dem Lautsprecherkreis zugeordneten Verstärkern,
- Figur 2: eine die Schaltung 1 ergänzende Anordnung mit Teilen der Torstation sowie Speicher- und Mikrofonkreise beeinflussenden Schalt- und Dämpfungsgliedern, und
- Figur 3: eine der der Fig. 2 ähnliche weitergebildete Teilschaltung.

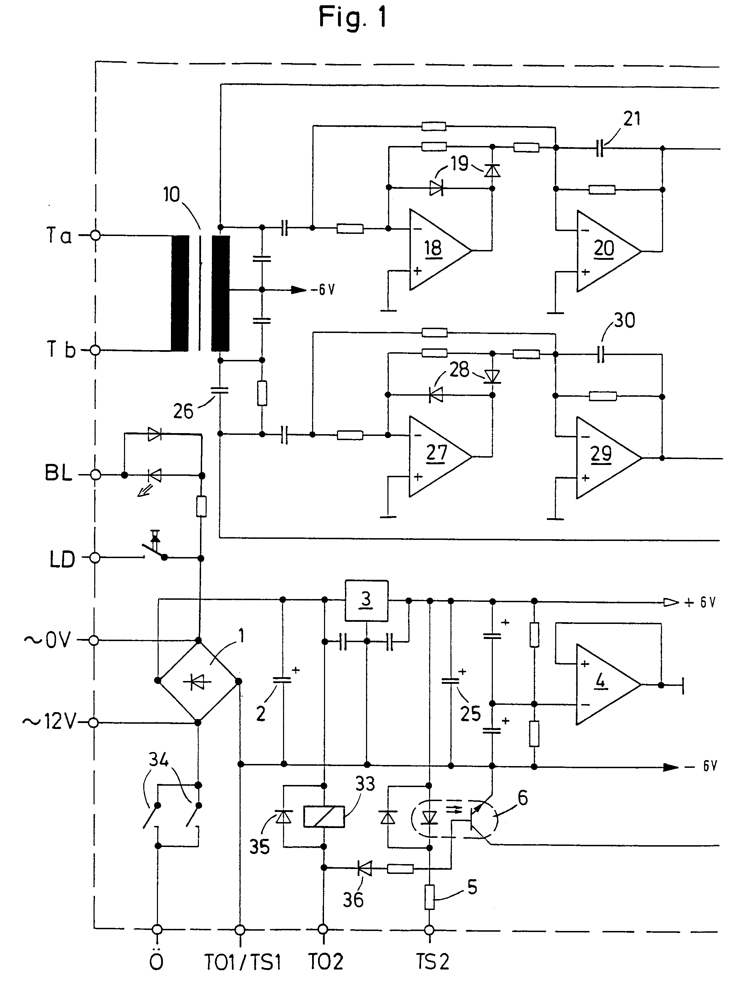

Im Schaltbild der Fig. 1 ist ein Netzteil enthalten, das einen von außen über einem hier nicht dargestellten Netztransformator über Anschlüsse ~ 0 V ~ 12 V mit 12 V Wechselspannung gespeisten Brückengleichrichter 1 zeigt, dessen Gleichstromausgang durch einen Ladekondensator 2 überbrückt ist. Die Spannungskonstanz wird durch einen an sich bekannten Spannungsregler 3 gesichert, dessen Ausgang mit einem Siebkondensator 25 beschaltet ist, und mittels einer den OP-Verstärker 4 enthaltenden Schaltungsanordnung wird für die 12 V Gleichspannung ein symmetrischer Massepunkt geschaffen, so daß als Versorgungsspannungen -6V und +6V zur Verfügung stehen.

Eine über einen nicht dargestellten Stromkreis von der Torstation aus betätigbare Gong- oder Weckereinrichtung gibt in der anzurufenden Wohnungssprechstelle ein akustisches Rufsignal, und von dieser oder deren Vermittlung aus wird der Anschluß TS1 mit TS2 verbunden und damit über einen Schutzwiderstand 5 die Leuchtdiode eines Optokopplers 6 an Spannung gelegt, so daß sie aufleuchtet und der Phototransistor des Optokopplers 6 leitend wird. Um unzulässig hohe Rückspannungen auszuschalten, ist die Leuchtdiode mit einer invers gepolten Diode beschaltet.

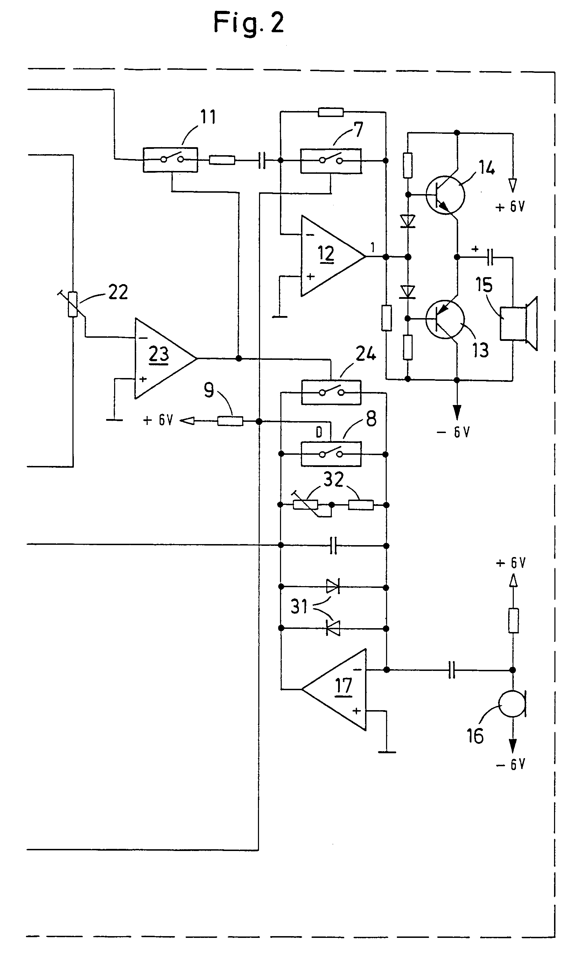

Zwei digital steuerbare Analogschalter 7 und 8 der Fig. 2 werden über einen Widerstand 9 positiv vorgespannt und damit geschlossen gehalten. Nach Ansprechen des Phototransistors des Optokopplers 6 werden sie an negative Spannung gelegt und damit geöffnet.

Die Wohnungssprechstelle ist über Klemmen Ta und Tb mit einem NF-Übertrager 10 verbunden, dessen Anzapf der Sekundärseite mit -6V verbunden und damit NF-mäßig geerdet ist. Das obere Ende der Sekundärwicklung ist über einen weiteren digital steuerbaren Analogschalter 11 mit einem der Eingänge eines Vorverstärkers 12 verbunden, der eine von komplementären Transistoren 13 und 14 gebildete Gegentakt-Endstufe beaufschlagt, an die der Torlautsprecher 15 angeschlossen ist.

Das Tormikrofon 16 steuert einen als PO-Verstärker ausgebildeten Vorverstärker 17 aus, der über einen Kondensator 26 der Fig. 1 den unten dargestellten Bereich der Sekundärspule des NF-Transistors 10 zu beaufschlagen vermag.

Das obere Ende dieser Wicklung ist über Siebglieder mit einem Eingang eines OP-Verstärkers 18 verbunden, der mit Dioden 19 beschaltet als Gleichrichter wirkt. Die hier anstehende pulsierende Gleichspannung wird auf einen Eingang eines weiteren OP-Verstärkers 20 gegeben, der mit einem Kondensator 21 belastet die Welligkeit der Eingangs-Gleichspannung weitgehend ausbügelt und in Verbindung mit dem ihm parallelgeschalteten Widerstand eine entsprechende Zeitkonstante aufweist. Die am Ausgang anstehende geglättete Gleichspannung wird einem Ende eines in Fig. 2 gezeigten Potentiometers 22 zugeführt. Die an dessen Abgriff abgenommene Spannung wird mittels eines OP-Verstärkers 23 verstärkt, an dessen Ausgang üblicherweise ein negatives Potential ansteht, welches die digital steuerbaren Analogschalter 11 und 24 schließt. Durch Schließen des Schalters 11 wird der Stromkreis vom Mikrofon der angeschlossenen Sprechstelle zum Vorverstärker 12 geschlossen, während gleichzeitig der ebenfalls geschlossene Analogschalter 24 den Vorverstärker 17 kurzschließt und damit den Stromkreis des Tormikrofones 16 praktisch wirkungslos macht.

Vor dem Kondensator 26 wird ebenfalls eine NF-Spannung abgenommen, die im wesentlichen die des Vorverstärkers 17 des Tormikrofones 16 ist, und einem OP-Verstärker 27 zugeführt. Durch Dioden 28 ist auch dieser OP-Verstärker 27 als Gleichrichter wirksam, und der ihm nachgeordnete OP-Verstärker 29 dämpft im Verein mit einem ihn überbrückenden Kondensator 30 die Welligkeit der gleichgerichteten Spannung und führt sie letztlich dem unten dargestellten Ende des Potentiometers 22 der Fig. 2 zu.

Damit ergibt sich folgende Wirkungsweise:

Im Ausgangszustand sind die digital steuerbaren Analogschalter 7 und 8 geschlossen, überbrücken die Vorverstärker 12 und 17 und verhindern damit sowohl ein Ansprechen des Torlautsprechers 15 als auch eine Auswirkung des Tormikrofones 16.

Mit Überbrücken der Kontakte TS1 und TS2 von der gerufenen Wohnungssprechstelle oder deren Vermittlung aus wird über den Schutzwiderstand 5 die Leuchtdiode des Optokopplers 6 erregt, und dessen nun fließender Strom legt negative Spannung an die Steuerelektroden der steuerbaren Analogschalter 7 und 8, die somit beide öffnen und die Vorverstärker 12 unde 17 freigeben.

Von der Wohnungssprechstelle aus gesprochene Anfragen werden über den NF-Übertragen 10 weitergegeben, mittels des OP-Verstärkers 18 verstärkt und gleichgerichtet, und die erhaltene Gleichspannung wird durch den Op-Verstärker 20 weiter verstärkt und beruhigt, so daß am Ausgange des OP-Verstärkers 23 eine positive Spannung auftritt, welche den digital steuerbaren Analogschalter 11 schließt und damit die am NF-Übertrager 10 anstehende NF-Spannung auf den Vorverstärker 12 und somit über die Transistoren 13 und 14 verstärkt auf den Torlautsprecher 15 gibt. Die parallelgeschaltete Steuerleitung des Analogschalters 24 schließt nunmehr (anstelle des bisherigen Schalters 8) den Vorverstärker 17 kurz und verhindert damit eine Wirksamkeit des Tormikrofones 16, so daß akustische Rückkopplungen vom Torlautsprecher 15 über das Tormikrofon 16 unbedingt verhindert sind. Der die Wohnungssprechstelle Bespreschende kann somit sich ungehindert über den Torlautsprecher 15 ausdrücken.

Sobald er schweigt, klingt die Gleichspannung am Ausgange des OP-Verstärkers 20 ab und der Ausgang des OP-Verstärkers 23 fällt auf negatives Potential zurück, so daß die Analogschalter 11 und 24 geöffnet werden und damit der Steuerstromkreis des NF-Vorverstärkers 12 unterbrochen und der Kurzschluß des Vorverstärkers 17 aufgehoben sind. Wird nun in das Tormikrofon 16 gesprochen, so gibt der Vorverstärker 17 die Mikrofonspannung verstärkt auf das unten dargestellte Ende der Sekundärwicklung des NF-Übertragers 10 weiter. Gleichzeitig erreicht diese verstärkte Mikrofonspannung aber auch den OP 27, der durch inverse Polung der Dioden 28 in bezug auf die Dioden 19 als Gleichrichter inverser Polarität wirkt, so daß die am Ausgange des OP-Verstärkers 29 anstehende, weiter verstärkte und geglättete Gleichspannung über das Potentiometer 22 und den OP-Verstärker 23 dessen Ausgang weiterhin in negative Bereiche zieht. Trotzdem hat der Sprecher der Wohnungssprechstelle die Möglichkeit, auf Wunsch dazwischenzusprechen, da die OP-Verstärker 18 und 20 mit höherer Verstärkung als die OP-Verstärker 27 und 29 ausgelegt sind und auch das Potentiometer 22 sich so einstellen läßt, daß die vom OP-Verstärker 20 zugeführte Spannung ein höheres Gewicht erreicht als die vom OP-Verstärker 29 zugeleitete. Mit anderen Worten: Der Sprecher der Wohnungssprechstelle hat jederzeit die Möglichkeit, den Mikrofonstromkreis zu unterdrücken und durch Leitendwerden des Analogschalters 11 den Sprechstromkreis zu schließen und dem an der Torstelle Weilenden Mitteilungen auch in dessen Gespräch hinein zu machen.

Unterstützt wird das höhere Gewicht der jeweilig wirksamen Wohnungssprechstelle durch zwei dem Vorverstärker 17 parallelgeschaltete, invers gepolte und als Begrenzer wirksame Dioden 31, und eine weiteren Anpassung an unterschiedlich ausgefallene Tormikrofone kann mittels justierbarer Widerstände 32 bewirkt werden.

Sind die Person des an der Torstation Weilenden und sein Begehren ausreichend abgeklärt, so kann der Bedienende der Wohnungssprechstelle durch Überbrücken der Anschlüsse TO1 und TO2 den Türöffner betätigen. Diese Überbrückung kann durch eine gesonderte Taste bewirkt werden oder durch einen gesonderten Ruf mittels einer bestimmten Ziffer der Wählscheibe oder einer bestimmten Zifferntaste über die Vermittlung. In diesem Falle wird die Wicklung des Relais 33 erregt, das seine der hohen Strombelastung wegen parallelgeschaltete Kontakte 34 betätigt und damit den Stromkreis des an die Klemmen Ö und ~ 0V angeschlossenen Türöffners direkt mit Wechselstrom erregt. Beim Ausschalten des Relais 33 und Absenken des Relaisstromes induzierte Spannungsspitzen werden durch eine dessen Wicklung parallelgeschaltete Diode 35 abgeleitet. Gleichzeitig aber wird der an der Wicklung 33 anstehende Spannungsabfall über die Diode 36 und einen Schutzwiderstand der Basis des Phototransistors des Optokopplers 6 zugeführt, so daß dessen Strom unterbrochen wird und mindestens für die Dauer der Betätigung des Türöffners die Analogkontakte 7 und 8 geschlossen werden und die Vorverstärker 12 und 17 kurzschließen und damit Geräuschübertragungen während des Arbeitens des Türöffners sowohl über den Lautsprecherkreis 15 als auch den Mikrofonkreis 16 der Torstation unterbunden sind.

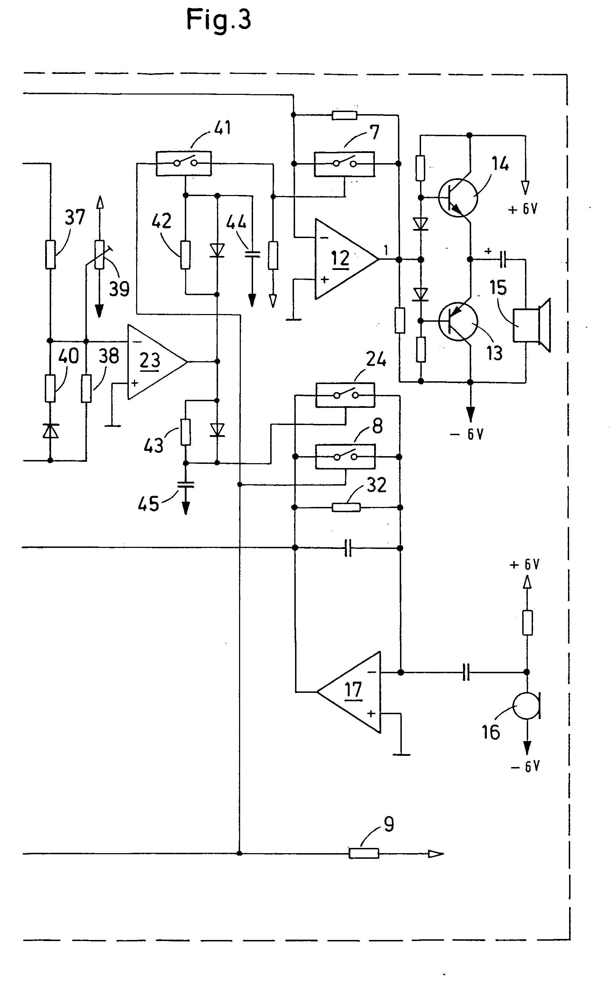

Es hat sich jedoch gezeigt, daß, insbesondere bei ungünstiger Einstellung des Widerstandes 32 und hohen Amplituden der von Tormikrofon 16 abgegebenen NF-Spannung die durch die invers geschalteten Dioden 31 bewirkte Begrenzung zu unliebsamen, die Verständlichkeit der übertragenen Sprache beeinträchtigenden Verzerrungen führt, und auch die mittel der OP-Verstärker 18, 20 sowie der Dioden 19 bewirkte Gleichspannung kann den OP-Verstärker 23 übersteuern. Hier kann sich die weitergebildete Teilschaltung der Fig. 3 bewähren. Nach ihr wird auf die Begrenzerwirkung invers gepolter Dioden 31 verzichtet, obwohl der vom Tormikrofon 16 abgegebene Pegel je nach Standort und Sprechlautstärke des Einsprechenden extrem zu schwanken vermag und zusätzlich gegebenenfalls übergroßer Straßenlärm, bspw. durch vorüberfahrende Lastzüge, sich weiterhin negativ auswirken kann. Eine erhöhte Sicherheit wird bereits bei der Ansteuerung des OP-Verstärkers 23 nach Fig. 3 erreicht, die über feste Spannungsteilerwiderstände 37, 38 erfolgt, wobei eine feste Vorspannung am Potentiometer 39 einstellbar ist. Weiterhin läßt sich die Wirksamkeit der vom Mikrofonstromkreis herrührenden Spannung durch einen dem Spannungsteilerwiderstand 38 parallel geschalteten Widerstand 40 beeinflussen, der der vorgeschalteten Diode wegen nur bei vorgegebener Polung wirksam wird. Der Sprachstromkreis selbst wird verbessert, indem auf den in seinem Stromkreis angeordneten digital steuerbaren Analogschalter 11 verzichtet wird und dafür die Steuerung des als Dämpfungsglied vorgesehenen digital steuerbaren Analogschalters 7 mittels des Analogschalters 41 in Abhängigkeit sowohl der Spannung des Phototransistors des Optokopplers 6 als auch der am Ausgang des OP-Verstärkers 23 auftretenden Spannung erfolgt. Auch hier lassen sich durch dem Ausgang des OP-Verstärkers 23 nachgeordnete Vorwiderstände 42, 43 Verbesserungen erzielen, zumal wenn diese in bestimmter Richtung durch Dioden überbrückt sind, und bewährt haben sich den Vorwiderständen nachgeordnete Siebkondensatoren 44, 45, welche einerseits die steuernde Gleichspannung weiterhin glätten, insbesondere aber im Verein mit den sie ladenden Vorwiderständen 42, 43 Zeitglieder darstellen, welche die Wirkung sich ändernder Spannungen verzögern. Hierdurch wird es möglich, die Übergänge so zu gestalten, daß beim Wechsel der Sprechrichtung die zunehmende Dämpfung des bisher wirksamen Sprechkreises kurzzeitig vor der Abnahme der Dämpfung des nunmehr sprechenden Kreises einsetzt und damit die Neigung zu akustischen Rückkopplungen weiterhin eingeschränkt ist.

## Patentansprüche

1. Türfreisprechanordnung mit an eine Vermittlungseinrichtung angeschlossenen Fernsprechern und einer mit einem Lautsprecher sowie einem Mikrofon ausgestatteten Torstation, bei der dem Torlautsprecher ein Verstärker vorgeordnet und dem Tormikrofon ein Vorverstärker nachgeordnet sind, denen zur Sprachsteuerung jeweils alternierend über deren beiden Stromkreisen zugeordnete weitere Verstärker gesteuerte Dämpfungsstufen zugeordnet sind,
**dadurch gekennzeichnet,**
daß als Dämpfungsstufen digital steuerbare Analogschalter (7, 8, 11, 24) vorgesehen sind.

2. Anordnung nach Anspruch 1,
**dadurch gekennzeichnet,**
daß zwei parallel gesteuerte Analogschalter (11, 24) vorgesehen sind, deren einer (11) dem dem Torlautsprecher (15) zugeordneten Endverstärker (13, 14) vorgeordnet ist, und deren anderer (24) dem Vorverstärker (17) des Tormikrofones (16) parallelgeschaltet ist.

3. Anordnung nach Anspruch 1,
**dadurch gekennzeichnet,**
daß zwei parallelgesteuerte Analogschalter (41, 24) vorgesehen sind, deren einer einen dem Vorverstärker (12) des Torlautsprechers (15) parallelgeschalteten Analogschalter (7) steuert, und deren anderer (24) dem Vorverstärker (17) des Tormikrofones (16) parallelgechaltet ist.

4. Anordnung nach mindestens einem der Ansprüche 1 bis 3,
**dadurch gekennzeichnet,**
daß dem Eingang der Verstärkeranordnungen (12, 13, 14) des Torlautsprechers (15) eine gleichrichtende Verstärkerstufe (18, 19) parallelgeschaltet ist, dem ein Eingangsspannungen glättender Gleichstromverstärker (20, 21) nachgeordnet ist, denen ein Analogschalter (11, 24) steuernder Verstärker (23) folgt.

5. Anordnung nach mindestens einem der Ansprüche 1 bis 4,
**dadurch gekennzeichnet,**
daß dem Ausgang des Vorverstärkers (17) des Tormikrofones (16) eine gleichrichtende Verstärkerstufe (27, 28) parallelgeschaltet ist, der ein Eingangsspannungen glättender Gleichstromverstärker (29, 30) nachgeordnet ist, denen ein Analogschalter (11, 24) steuernder Verstärker (23) folgt.

6. Anordnung nach Ansprüchen 4 und 5,
**dadurch gekennzeichnet,**
daß die gleichrichtenden Verstärkerstufen (18, 19 und 27, 28) invers gepolt sind.

7. Anordnung nach mindestens einem der Ansprüche 1 bis 6,
**dadurch gekennzeichnet,**
daß die Gleichstromverstärker (20, 29) mit den beiden Enden eines Potentiometers (22) verbunden sind, dessen vorzugsweise verstellbarer Abgriff den OP-Verstärker (23) steuert.

8. Anordnung nach mindestens einem der Ansprüche 1 bis 7,
**dadurch gekennzeichnet,**
daß der Eingang des OP-Verstärkers (23) eine an einem Potentiometer (39) abgegriffene Vorspannung erhält.

9. Anordnung nach mindestens einem der Ansprüche 1 bis 8,
**dadurch gekennzeichnet,**
daß die Ausgangsspannung des OP-Verstärkers (23) den zu steuernden Elementen (11, 24, 41) über R-C-Glieder (42, 44; 43, 45) zugeführt wird.

10. Anordnung nach Anspruch 9,
**dadurch gekennzeichnet,**
daß durch unterschiedliche Zeitkonstanten der R-C-Glieder (42, 44; 43, 45) das Aufblenden einer Sprechvorrichtung gegen das Abblenden der bisher wirksamen verzögert wird.

11. Anordnung nach mindestens einem der Ansprüche 1 bis 10,
**dadurch gekennzeichnet,**
daß dem den Torlautsprecher (15) steuernden Vorverstärker (12) und/oder dem Vorverstärker (17) des Tormikrofones (16) digital steuerbare Analogschalter (7, 8) parallelgeschaltet sind, welche von einer Zentrale und/oder deren Sprechstelle aus öffenbar sind.

12. Anordnung nach Anspruch 11,
**gekennzeichnet durch**
einen von der Zentrale und/oder deren Sprechstellen aus betätigbaren Optokoppler (6), der eine den digital steuerbaren Analogschaltern (7, 8) zugeführte Sperrspannung abzubauen vermag.

13. Anordnung nach Anspruch 12,
**dadurch gekennzeichnet,**
daß die Basis des Fototransistors des Optokopplers (6) durch Betätigen des Türöffners sperrbar ist.

14. Anordnung nach Anspruch 13,
**dadurch gekennzeichnet,**
daß die Basis des Fototransistors des Optokopplers (6) über eine Diode (35) mit einem Türöffnerkontakte (34) aufweisenden Relais (33) verbunden ist.
